# FASCICULE DE BREVET EUROPEEN

(11) **EP 1 773 630 B1**
(45) Date de publication et mention de la délivrance du brevet: **19.12.2007**
(21) Numéro de dépôt: 05770989.1
(22) Date de dépôt: 12.05.2005
(51) Int. Cl.: B60R 19/48, B60R 21/01

(54) **DISPOSITIF D'ÉVALUATION D'EFFORTS DANS UN PARE-CHOCS D'UN VÉHICULE AUTOMOBILE UTILISANT UN CAPTEUR LOGÉ DANS UNE GORGE ET PARE-CHOCS**
VORRICHTUNG ZUR AUSWERTUNG DER KRÄFTE IN EINEM KRAFTFAHRZEUG-STOSSFÄNGER MITTELS EINES IN EINEM NUT ANGEBRACHTEN SENSORS UND EINES STOSSFÄNGERS
DEVICE FOR EVALUATING FORCES IN A MOTOR VEHICLE BUMPER BY USING A SENSOR ARRANGED IN A GROOVE AND A BUMPER

(30) Priorité: 13.05.2004 FR 0405229
(43) Date de publication de la demande: 18.04.2007
(73) Titulaire: COMPAGNIE PLASTIC OMNIUM, 69007 Lyon (FR)
(72) Inventeur: ROUX, Jean-Pierre, F-69480 Pommiers (FR)
(74) Mandataire: Remy, Vincent Noel Paul
(86) Numéro de dépôt international: PCT/FR2005/001193
(87) Numéro de publication internationale: WO 2005/115802

(56) Documents cités:
- WO-A-03/082639
- WO-A-20/04058545

## Description

La présente invention concerne un dispositif d'évaluation d'efforts dans un pare-chocs d'un véhicule automobile, utilisant un capteur logé dans une gorge, ainsi qu'un pare-chocs équipé d'un tel dispositif.

Un dispositif selon la préambule de la revendication 1 est généralement connu dans l'état de la technique.

Afin d'assurer la sécunté d'un piéton lors d'un choc avec un véhicule automobile, on prévoit en général des dispositifs de protection, agencés sur le véhicule automobile, destinés à limiter les dommages corporels subis par le piéton.

En particulier, il existe des dispositifs de protection passifs, tels que des poutres basses ou des absorbeurs d'énergie pour le choc tête, et des dispositifs de protection actifs, tels que des ballons gonflants externes ou des organes de levage de capot.

Les dispositifs de protection actifs se déclenchent généralement de manière irréversible en cas de choc. Ils sont souvent à usage unique, et sont quelquefois destructeurs pour leur environnement immédiat. Il est donc préférable que ces dispositifs ne s'activent pas pour tout choc, mais seulement en cas de choc avec un piéton.

On connaît déjà, dans l'état de la technique, un dispositif d'évaluation d'efforts dans un pare-chocs d'un véhicule automobile, muni d'un moyen de discrimination de chocs.

Au moment d'un choc, les moyens de discrimination permettent de déterminer si ce choc correspondant à un choc avec un piéton, c'est à dire que l'effort correspond à ce choc dépasse un seuil prédéterminé. Dans ce cas, les dispositifs de protection actifs sont actionnés. Ainsi, les dispositifs de protection actifs ne sont déclenchés qu'à bon escient.

On sait par ailleurs que la raideur d'un pare-chocs dépend de sa température, de sorte que l'effort mesuré par un capteur intégré au pare-chocs varie avec la température de ce dernier.

Ainsi, pour un même choc, l'effort mesuré est moindre lorsque le pare-chocs est à basse température que lorsqu'il est à haute température. Par conséquent, la discrimination entre obstacles peut souffrir d'une approximation liée à la variation de la mesure fournie par le capteur en fonction de la température du pare-chocs.

Certains dispositifs d'évaluation d'efforts de l'état de la technique prennent en compte la température du pare-chocs et compensent ses effets en faisant varier en conséquence le seuil prédéterminé. Cependant, de tels dispositifs d'évaluation d'efforts sont souvent coûteux en raison de leurs structures complexes.

L'invention a notamment pour but de remédier à cet inconvénient en fournissant un dispositif d'évaluation d'efforts simple et économique, susceptible de prendre en compte la température du pare-chocs.

A cet effet, l'invention a pour objet un dispositif d'évaluation d'efforts dans un pare-chocs d'un véhicule automobile, muni d'un moyen de discrimination de chocs, le pare-chocs comportant d'une part un absorbeur d'énergie déformable ayant au moins une paroi exposée à une compression en cas de choc, d'autre part une gorge d'une profondeur donnée ménagée dans ou en regard de ladite paroi de l'absorbeur, le dispositif étant **caractérisé en ce qu**'il comporte un capteur d'effort destiné à se loger dans ou en regard de la gorge, ledit capteur étant du type binaire, c'est à dire qu'il signale lorsque l'effort qu'il subit dépasse un seuil prédéterminé, **et en ce qu**'il comporte un moyen de compensation de la gorge, tel que cette gorge a peu d'effet sur la transmission des efforts au capteur en cas de déformation du pare-chocs lorsque le pare-chocs se trouve à basse température et que la même gorge atténue la transmission des efforts au capteur lorsque le pare-chocs se trouve à haute température.

Au sens de la présente invention, le terme « effort » désigne toute grandeur physique traduisant et quantifiant une sollicitation mécanique. Cette grandeur physique peut être non seulement une force mais également une pression ou encore une autre grandeur.

Selon l'invention, la gorge a pour fonction d'atténuer une trop grande sensibilité du capteur. En effet, les inventeurs ont remarqué que si le capteur est placé sur la paroi de l'absorbeur, il subit trop directement les déformations du pare-chocs en cas de choc et aucune discrimination n'est possible car le seuil d'effort du capteur est systématiquement franchi.

Au fond de la gorge, le capteur ne perçoit que la quantité d'énergie qui n'a pas encore été absorbée par l'absorbeur et la discrimination entre obstacles devient possible.

Toutefois, le fait de loger le capteur au fond de la gorge rend ce dernier sensible aux variations de raideur de l'absorbeur, ce qui aggrave le phénomène déjà décrit de défaut de fiabilité des mesures d'efforts en raison des variations de température du pare-chocs.

Les inventeurs ont trouvé un remède à ce phénomène, remède qui élimine les inconvénients liés à la variation de raideur non seulement du seul absorbeur, mais également de l'ensemble du pare-chocs.

Ainsi, le fait, selon l'invention, de compenser la profondeur de la gorge en fonction de la température du pare-chocs, grâce au moyen de compensation, fournit un résultat inattendu à l'échelle de l'ensemble du pare-chocs.

De plus, il est remarquable que la compensation des effets de la température par le moyen de compensation est automatique, de sorte qu'il devient inutile de relever la température du pare-chocs ou de modifier le seuil prédéterminé du capteur d'effort, ce qui rend le dispositif selon l'invention d'autant plus simple.

Suivant d'autres caractéristiques optionnelles du dispositif d'évaluation d'efforts selon l'invention :
- le moyen de compensation est une pièce de compensation destinée à se loger dans ou en regard de la gorge ;
- le capteur d'effort est agencé entre le fond de la gorge et la pièce de compensation ;
- le capteur d'effort est agencé entre la pièce de la compensation et l'embouchure de la gorge ;
- la paroi de l'absorbeur dans laquelle est ménagée la gorge est destinée à faire face à une poutre de chocs ;
- la paroi de l'absorbeur dans laquelle est ménagée la gorge est destinée à faire face à une peau du pare-chocs ;
- la pièce de compensation est un bloc d'une matière déformable telle que, à haute température, la raideur de la pièce de compensation est inférieure à celle de l'absorbeur à la même température au moins au début du choc, de manière que la pièce de compensation ne transmette pas d'effort au capteur tant que l'absorbeur n'a pas été suffisamment déformé, afin que la présence de la gorge permette à l'absorbeur d'absorber effectivement de l'énergie avant que le capteur ne perçoive la déformation, et, à basse température, la raideur de la pièce de compensation est, dès le début du choc, au moins égale à celle de l'absorbeur à la même température, afin que le capteur perçoive l'effort comme si la gorge était moins profonde, voire inexistante ;
- la pièce de compensation est un bloc dont le volume est une fonction décroissante de la température, de manière à augmenter ou réduire la profondeur effective de la gorge ;
- le capteur d'effort est agencé de manière à fournir un même signal pour un effort appliqué de manière identique à deux endroits différents du pare-chocs.

L'invention sera mieux comprise à la lecture de la description qui va suivre, donnée uniquement à titre d'exemple et faite en se référant aux dessins annexés dans lesquels :
- la figure 1 est une section d'un éclaté d'un pare-chocs selon un premier mode de réalisation de l'invention ;
- la figure 2 est une vue similaire à la figure 1 d'une variante du pare-chocs selon le premier mode de réalisation de l'invention ;
- les figures 3 et 4 sont des vues similaires aux figures 1 et 2 d'un pare-chocs selon un deuxième mode de réalisation de l'invention ;
- les figures 5 et 6 sont des vues similaires aux figures 1 et 2 d'un pare-chocs selon un troisième mode de réalisation de l'invention ;
- les figures 7 et 8 sont des vues similaires aux figures 1 et 2 d'un pare-chocs selon un quatrième mode de réalisation de l'invention.

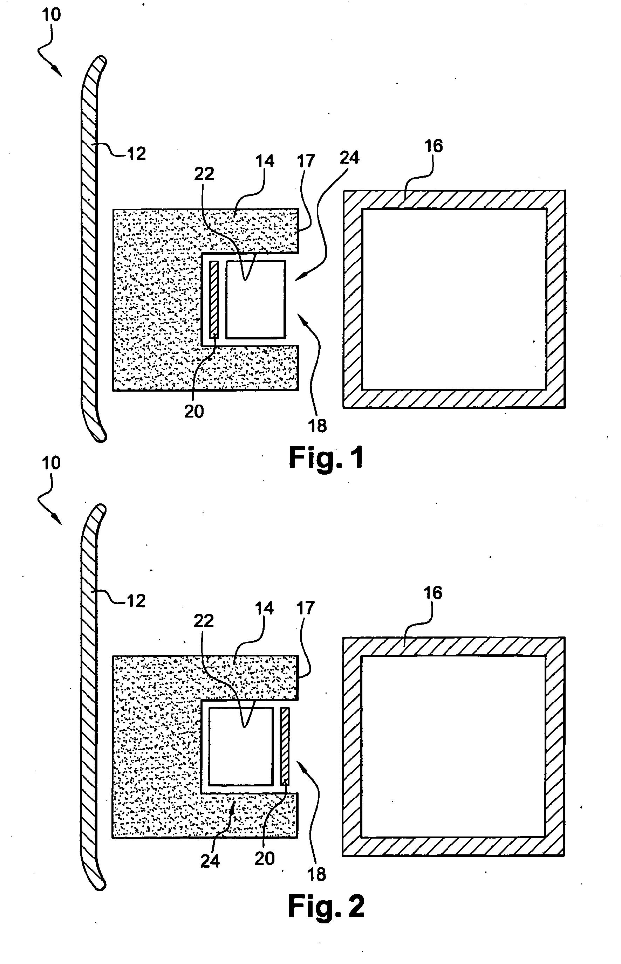

On a représenté sur la figure 1 un pare-chocs d'un véhicule automobile, désigné par la référence générale 10.

Le pare-chocs 10 comporte une peau de pare-chocs 12, un absorbeur d'énergie 14 déformable sous l'effet d'un choc, et une poutre de chocs 16.

L'absorbeur d'énergie 14 est muni d'au moins une paroi 17 exposée à une compression en cas de chocs. Dans l'ensemble représenté sur la figure 1, la paroi 17 fait face à la poutre de chocs 16.

Le véhicule automobile est en outre muni d'un dispositif 18 d'évaluation d'efforts dans le pare-chocs 10.

Ce dispositif d'évaluation d'efforts 18 est relié à des moyens de discrimination de chocs (non représentés), notamment destinés à déterminer si un choc subit par le pare-chocs est un choc avec un piéton.

Le dispositif d'évaluation d'efforts 18 est aussi relié à au moins un dispositif de protection actif (non représenté), afin de commander son déclenchement en cas de choc avec un piéton.

Les moyens de discrimination de chocs comportent au moins un capteur d'efforts 20, formant une bande s'étendant selon la direction transversale du véhicule.

Le capteur 20 est agencé dans le pare-chocs 10, derrière l'absorbeur 14 de ce pare-chocs 10, dans une gorge 22 ménagée dans la paroi 17 de cet absorbeur 14.

Ce capteur 20 est généralement rapporté sur l'absorbeur 14 par collage, soudage, encliquetage ou surmoulage.

Le capteur 20 est du type binaire, c'est à dire qu'il est apte à signaler lorsque l'effort qu'il subit, à la suite d'un choc, dépasse un seuil prédéterminé.

De préférence, la gorge 22 est aménagée de façon que, à température fixe, le capteur d'effort 20 fournisse un même signal pour un effort appliqué de manière identique à deux endroits différents du pare-chocs 10. En pratique, cet aménagement consiste à régler la profondeur de la gorge pour compenser les différences de comportement de l'absorbeur en différents points de la larguer du véhicule.

Afin de prendre en compte la température du pare-chocs dans l'évaluation d'un effort, le dispositif d'évaluation d'efforts 18 est muni en outre d'une pièce 24 de compensation de la profondeur de la gorge 22.

Cette pièce de compensation 24 est de préférence rapportée dans la gorge 22 par collage, soudage ou encliquetage. En variante, la pièce de compensation 24 peut être issue de moulage avec l'absorbeur 14, par exemple de manière à former une charnière.

La pièce de compensation 24 est telle que la profondeur de la gorge 22 apparaît au capteur comme étant plus petite lorsque le pare-chocs 10 se trouve à basse température que lorsqu'il se trouve à haute température. A cet effet, la raideur de la pièce de compensation est choisie de manière à se comporter comme suit.

Lors d'un choc à haute température, la raideur de la pièce de compensation 24 est inférieure à celle de l'absorbeur 14 à la même température, au moins au début de ce choc. De cette manière, la pièce de compensation 24 ne transmet pas d'efforts au capteur 20 tant que l'absorbeur 14 n'a pas été suffisamment déformé. Ainsi, la présence de la gorge 22 permet à l'absorbeur 14 d'absorber effectivement de l'énergie avant que le capteur 20 ne perçoive la déformation, et cela bien que la raideur de l'absorbeur 14 soit faible à haute température.

Lors d'un choc à basse température, la raideur du moyen de compensation 24 est, dès le début du choc, au moins égale à celle de l'absorbeur 14 à la même température. De cette manière, le capteur perçoit l'effort comme si la gorge était moins profonde, voire inexistante. En effet, comme la raideur de l'absorbeur 14 est élevée, le capteur pourrait difficilement mesurer l'effort correspondant au choc dans le cas où la gorge serait aussi profonde qu'à haute température.

En d'autres termes, la variation de raideur de la pièce de compensation vise à faire en sorte qu'à haute température, la gorge 22 soit pleinement efficace et qu'à basse température, la même gorge 22 soit pratiquement sans effet.

Dans le mode réalisation décrit sur la figure 1, le capteur d'efforts 20 est agencé entre le fond de la gorge 22 et la pièce de compensation 24.

De préférence, afin que le capteur d'efforts travaille en compression de manière optimale, la pièce de compensation 24 est munie d'une première face plane, ou adaptée au capteur d'effort 20, en regard de ce capteur d'effort 20, et d'une seconde face de forme complémentaire de la peau de pare-chocs 12, en regard de cette peau de pare-chocs 12.

On notera que l'ordre dans lequel sont empilés le capteur d'efforts 20 et la pièce de compensation 24 n'a pas d'importance, en première approximation, dans la transmission des efforts.

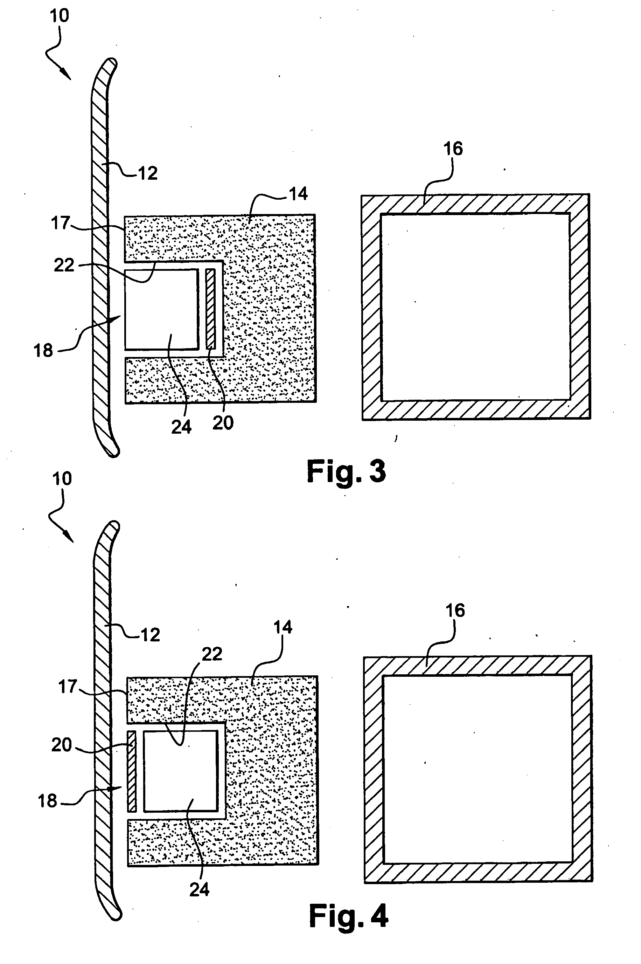

Ainsi, dans la variante représentée sur la figure 2, le capteur d'efforts est agencé entre la pièce de compensation 24 et 'embouchure de la gorge 22.

Sur les figures 3 à 8, les éléments analogues à ceux des figures précédentes sont désignés par des références identiques.

Sur les figures 3 et 4, la paroi 17 de l'absorbeur 14 dans laquelle est ménagée la gorge 22 fait face à la peau de pare-chocs 12. De même que dans le premier mode de réalisation représenté sur les figures 1 et 2, l'ordre dans lequel sont empilés le capteur 20 et la pièce de compensation 24 n'influe pas sensiblement sur l'effort mesuré.

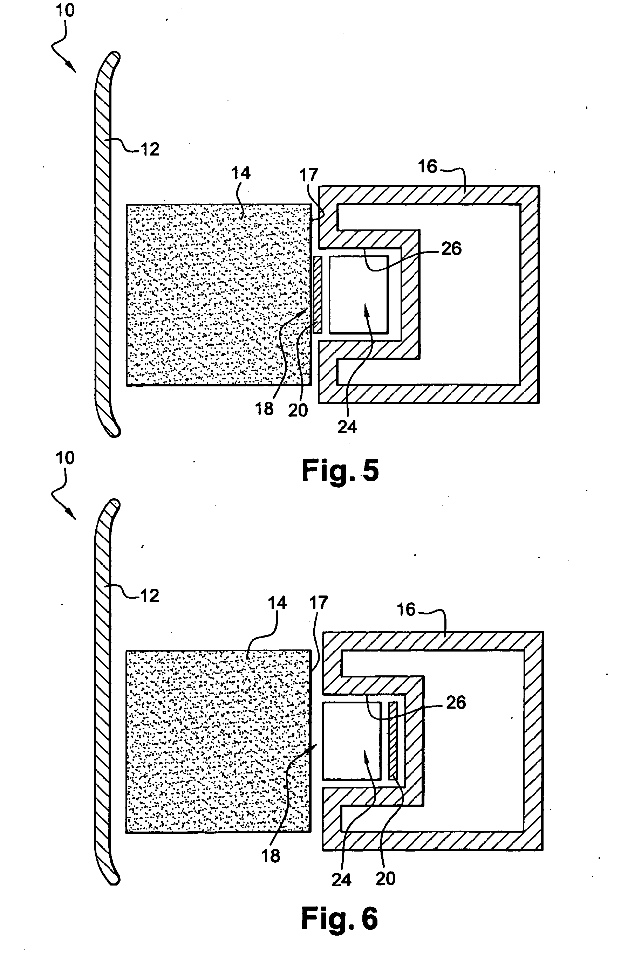

Sur les figures 5 et 6, on a ménagé une gorge 26 dans la poutre de chocs 16, en regard de la paroi 17 de l'absorbeur 14 exposé à une compensation en cas de chocs.

Sur la figure 5, le capteur 20 affleure sur la paroi 17, la pièce de compensation 24 étant agencée dans la gorge 26.

Sur la figure 6, le capteur 20 est agencé dans le fond de la gorge 26. Ce capteur d'efforts 20 est alors agencé entre le fond de la gorge 26 et la pièce de compensation 24.

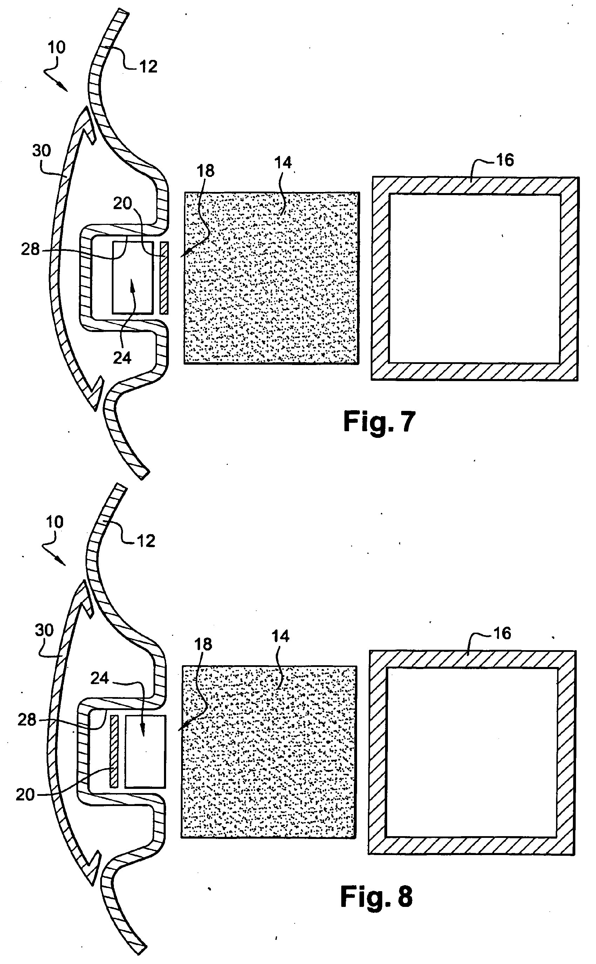

Sur les figures 7 et 8, on a ménagé une gorge 28 dans la peau de pare-chocs 12, en regard de la paroi 17 et l'absorbeur 14 exposé à une compression en cas de chocs.

Pour des raisons esthétiques, une pièce d'aspect 30 est agencée sur la peau de pare-chocs 12. Cette pièce d'aspect 30 est fixée à la peau de pare-chocs 12 selon des moyens classiques, par exemple par encliquetage, par collage ou par tout autre moyen de fixation.

Sur la figure 7, le capteur d'effort est agencé entre la pièce de compensation et l'embouchure de la gorge 28.

Sur la figure 8, le capteur d'efforts est agencé entre le fond de la gorge 28 et la pièce de compensation 24.

Il est bien entendu que les modes de réalisation qui viennent d'être décrits ne présentent aucun caractère limitatif et peuvent recevoir toute modification désirable sans pour cela sortir du cadre de l'invention.

## Revendications

1. Dispositif (18) d'évaluation d'efforts dans un pare-chocs (10) d'un véhicule automobile, muni d'un moyen de discrimination de chocs, le pare-chocs (10) comportant d'une part un absorbeur d'énergie (14) déformable ayant au moins une paroi (17) exposée à une compression en cas de choc, d'autre part une gorge (22, 26, 28) d'une profondeur donnée ménagée dans ou en regard de ladite paroi (17) de l'absorbeur (14), le dispositif (18) étant **caractérisé en ce qu'**il comporte un capteur d'effort (20) destiné à se loger dans ou en regard de la gorge (22, 26, 28), ledit capteur (20) étant du type binaire, c'est à dire qu'il signale lorsque l'effort qu'il subit dépasse un seuil prédéterminé, et **en ce qu'**il comporte un moyen (24) de compensation de la gorge (22, 26, 28), tel que cette gorge a peu d'effet sur la transmission des efforts au capteur (20) en cas de déformation du pare-chocs lorsque le pare-chocs se trouve à basse température et que la même gorge (22, 26, 28) atténue la transmission des efforts au capteur (20) lorsque le pare-chocs se trouve à haute température.

2. Dispositif d'évaluation d'effort (18) selon la revendication 1, dans lequel le moyen (24) de compensation est une pièce de compensation destinée à se loger dans ou en regard de la gorge.

3. Dispositif d'évaluation d'efforts (18) selon la revendication 2, dans lequel le capteur d'effort (20) est agencé entre le fond de la gorge (22, 26, 28) et la pièce de compensation (24).

4. Dispositif d'évaluation d'efforts (18) selon la revendication 2, dans lequel le capteur d'effort (20) est agencé entre la pièce de compensation (24) et l'embouchure de la gorge (22, 26, 28).

5. Dispositif d'évaluation d'efforts (18) selon l'une quelconque des revendications 1 à 4, dans lequel la paroi (17) de l'absorbeur (14) exposée à une compression en cas de choc est destinée à faire face à une poutre de chocs (16).

6. Dispositif d'évaluation d'efforts (18) selon l'une quelconque des revendications 1 à 4, dans lequel la paroi (17) de l'absorbeur (14) exposée à une compression en cas de choc est destinée à faire face à une peau du pare-chocs (12).

7. Dispositif d'évaluation d'effort (18) selon l'une quelconque des revendications 2 à 6, dans lequel la pièce de compensation (24) est un bloc d'une matière déformable tel que :
- à haute température, la raideur de la pièce de compensation (24) est inférieure à celle de l'absorbeur (14) à la même température au moins au début du choc, de manière que la pièce de compensation (24) ne transmette pas d'effort au capteur (20) tant que l'absorbeur (14) n'a pas été suffisamment déformé, afin que la présence de la gorge (22, 26, 28) permette à l'absorbeur (14) d'absorber effectivement de l'énergie avant le capteur (20) ne perçoive la déformation ;
- à basse température, la raideur de la pièce de compensation (24) est, dès le début du choc, au moins égale à celle de l'absorbeur (14) à la même température, afin que le capteur (20) perçoive l'effort comme si la gorge (22, 26, 28) était moins profonde, voire inexistante.

8. Dispositif d'évaluation d'efforts (18) selon l'une quelconque des revendications 2 à 6 , dans lequel la pièce de compensation (24) est un bloc dont le volume est une fonction décroissante de la température.

9. Dispositif d'évaluation d'efforts (18) selon l'une quelconque des revendications précédentes, dans lequel le capteur d'effort (20) est agencé de manière à fournir un même signal pour un effort appliqué de manière identique à deux endroits différents du pare-chocs (10).

10. Pare-chocs d'un véhicule automobile, **caractérisé en ce qu'**il comporte :
- un absorbeur d'énergie (14) déformable ayant au moins une paroi (17) exposée à une compression en cas de choc,
- une gorge (22, 26, 28) d'une profondeur donnée ménagée dans ou en regard de ladite paroi (17) de l'absorbeur (14),
- un dispositif (18) d'évaluation d'efforts selon l'une quelconque des revendications 1 à 9.

## Claims

1. A device (18) for evaluating forces in a motor vehicle bumper (10), the device being provided with impact discriminator means, the bumper (10) comprising firstly a deformable energy absorber (14) having at least one wall (17) exposed to compression in the event of an impact, and secondly a groove (22, 26, 28) of given depth formed in or facing said wall (17) of the absorber (14), the device (18) being **characterized in that** it includes a force sensor (20) for housing in or facing the groove (22, 26, 28), said sensor (20) being of binary type, i.e. it generates a signal when the force to which it is subjected exceeds a predetermined threshold, and **in that** the device further includes compensation means (24) for compensating the groove (22, 26, 28), such that said groove has little effect on the transmission of forces to the sensor (20) in the event of bumper deformation when the bumper is at low temperature and **in that** the same groove (22, 26, 28) attenuates the transmission of forces to the sensor (20) when the bumper is at high temperature.

2. A force evaluation device (18) according to claim 1, in which the compensation means (24) is a compensation part designed to be housed in or facing the groove.

3. A force evaluation device (18) according to claim 2, in which the force sensor (20) is arranged between the end wall of the groove (22, 26, 28) and the compensation part (24).

4. A force evaluation device (18) according to claim 2, in which the force sensor (20) is arranged between the compensation part (24) and the mouth of the groove (22, 26, 28).

5. A force evaluation device (18) according to any one of claims 1 to 4, in which the wall (17) of the absorber (14) that is exposed to compression in the event of an impact is designed to face an impact beam (16).

6. A force evaluation device (18) according to any one of claims 1 to 4, in which the wall (17) of the absorber (14) exposed to compression in the event of an impact is designed to face a skin of the bumper (12).

7. A force evaluation device (18) according to any one of claims 2 to 6, in which the compensation part (24) is a block of deformable material, such that:
at high temperature, the stiffness of the compensation part (24) is less than that of the absorber (14) at the same temperature, at least at the beginning of an impact, such that the compensation part (24) does not transmit force to the sensor (20) so long as the absorber (14) has not been deformed sufficiently, so that the presence of the groove (22, 26, 28) enables the absorber (14) to absorb energy effectively before the sensor (20) perceives the deformation; and
at low temperature, the stiffness of the compensation part (24) is, from the beginning of an impact, not less than that of the absorber (14) at the same temperature, such that the sensor (20) perceives the force as though the groove (22, 26, 28) were shallower, or even non-existent.

8. A force evaluation device (18) according to any one of claims 2 to 6, in which the compensation part (24) is a block of volume that decreases with increasing temperature.

9. A force evaluation device (18) according to any preceding claim, in which the force sensor (20) is arranged in such a manner as to deliver a signal that is the same for a force applied in identical manner to two different locations on the bumper (10).

10. A motor vehicle bumper, **characterized in that** it includes:
a deformable energy absorber (14) having at least one wall (17) that is exposed to compression in the event of an impact;
a groove (22, 26, 28) of a given depth formed in or facing said wall (17) of the absorber (14); and
a force evaluation device (18) according to any one of claims 1 to 9.

## Patentansprüche

1. Vorrichtung zur Bewertung von Kräften (18) in einem Stoßfänger (10) eines Kraftfahrzeugs, wobei die Vorrichtung mit einem Mittel zur Unterscheidung der Aufprallvorgänge ausgerüstet ist, wobei der Stoßfänger (10) einerseits einen verformbaren Energieabsorber (14) mit mindestens einer Wandung (17), die im Falle eines Aufpralls einer Kompression ausgesetzt ist, und andererseits eine in oder gegenüber der Wandung (17) des Absorbers (14) vorgesehene Einstülpung (22, 26, 28) von einer bestimmten Tiefe aufweist, wobei die Vorrichtung (18) **dadurch gekennzeichnet ist, dass** sie einen Kraftsensor (20) aufweist, der zum Einbau in oder gegenüber der Einstülpung (22, 26, 28) vorgesehen ist, wobei es sich bei dem Sensor (20) um einen binären Typ handelt, d.h., dass er ein Signal abgibt, wenn die auf ihn einwirkende Kraft einen vorgegebenen Schwellenwert überschreitet, und **dadurch**, dass er ein Kompensationsmittel (24) der Einstülpung (22, 26, 28) aufweist, so dass diese Einstülpung kaum Auswirkungen auf die Übertragung der Kräfte zum Sensor (20) im Falle der Verformung des Stoßfängers hat, wenn sich der Stoßfänger auf einer niedrigen Temperaturen befindet, und dass dieselbe Ausstülpung (22, 26, 28) die Übertragung der Kräfte auf den Sensor (20) dämpft, wenn sich der Stoßfänger auf einer hohen Temperatur befindet.

2. Vorrichtung zur Bewertung von Kräften (18) nach Anspruch 1, in der es sich bei dem Kompensationsmittel (24) um ein Kompensationsstück handelt, das zum Einbau in oder gegenüber der Einstülpung vorgesehen ist.

3. Vorrichtung zur Bewertung von Kräften (18) nach Anspruch 2, in der der Kraftsensor (20) zwischen dem Boden der Einstülpung (22, 26, 28) und dem Kompensationsstück angeordnet ist.

4. Vorrichtung zur Bewertung von Kräften (18) nach Anspruch 2, in der der Kraftsensor (20) zwischen dem Kompensationsstück (24) und dem Eingangsbereich der Ausstülpung (22, 26, 28) angeordnet ist.

5. Vorrichtung zur Bewertung von Kräften (18) nach einem der Ansprüche 1 bis 4, in der die im Falle eines Aufpralls einer Kompression ausgesetzte Wandung (17) des Absorbers (14) dafür vorgesehen ist, dass sie einem Aufprallträger (16) gegenüber liegt.

6. Vorrichtung zur Bewertung von Kräften (18) nach einem der Ansprüche 1 bis 4, in der die im Falle eines Aufpralls einer Kompression ausgesetzte Wandung (17) des Absorbers (14) dafür vorgesehen ist, dass sie einer Verkleidung des Stoßfängers (12) gegenüber liegt.

7. Vorrichtung zur Bewertung von Kräften (18) nach einem der Ansprüche 2 bis 6, in der das Kompensationsstück (24) ein Block aus einem verformbaren Material mit folgenden Eigenschaften ist:
- bei hohen Temperaturen ist die Steifigkeit des Kompensationsstücks zumindest bei Beginn des Aufpralls geringer als die des Absorbers (14) bei gleicher Temperatur, so dass das Kompensationsstück (24) keine Kräfte zum Sensor (20) überträgt, so lange der Absorber (14) nicht ausreichend verformt wurde, damit der Absorber (14) durch das Vorhandensein der Einstülpung (22, 26, 28) in der Lage ist, die Energie wirksam zu absorbieren, bevor der Sensor (20) die Verformung erkennen kann;
- bei niedrigen Temperaturen ist die Steifigkeit des Kompensationsstücks (24) zu Beginn des Aufpralls zumindest gleich der Steifigkeit des Absorbers (14) bei gleicher Temperatur, damit der Sensor (20) die Kräfte so erkennt, als ob die Einstülpung (22, 26, 28) weniger tief oder gar nicht vorhanden wäre.

8. Vorrichtung zur Bewertung von Kräften (18) nach einem der Ansprüche 2 bis 6, in der das Kompensationsstück (24) ein Block ist, dessen Volumen mit steigender Temperatur abnimmt.

9. Vorrichtung zur Bewertung von Kräften (18) nach einem der vorangehenden Ansprüche, in der der Kraftsensor (20) so angeordnet ist, dass er bei einer Kraft, die auf gleiche Weise an zwei verschiedenen Stellen des Stoßfängers (10) einwirkt, ein gleiches Signal abgibt.

10. Stoßfänger eines Kraftfahrzeugs, **dadurch gekennzeichnet, dass** er Folgendes aufweist:
- einen verformbaren Energieabsorber (14) mit mindestens einer Wandung (17), die im Fall eines Aufpralls einer Kompression ausgesetzt ist,
- eine Ausstülpung (22, 26, 28) mit einer bestimmten Tiefe, die in oder gegenüber der Wandung (17) des Absorbers (14) angeordnet ist,
- Vorrichtung zur Bewertung von Kräften (18) nach einem der Ansprüche 1 bis 9.
